# EUROPEAN PATENT APPLICATION

(11) **EP 1 772 710 A1**
(43) Date of publication of application: **11.04.2007**
(21) Application number: 05022038.3
(22) Date of filing: 10.10.2005
(51) Int. Cl.: G01F 11/24

(54) **Metering cap and station for the preparation of mixtures of substances in which such metering caps are used**

(71) Applicant: Magifar Ltd., Port Louis - (MU); MAGISING PTE LTD., Singapore 068897 (SG)
(72) Inventor: Gouchet, Franck, 45240 La-Ferte-Saint-Aubin (FR)
(74) Representative: Micheli & Cie SA

(57) **Abstract**

The metering cap (10) comprises a body (11) and a metering disc (15) rotatably mounted between two surfaces (20, 24) of the body. The metering disc (15) has at least one hole or cavity (18) that can be filled with a unit volume of powder through a first opening (21) in a first angular position of the metering disc.

By rotation of this disc by means of a gear wheel (17) solidly attached to a drive shaft (16) and to the metering disc (15), the powder held in the cavity (18) can be discharged through a second opening (23) and an exit channel (22) in a second angular position. The metering cap is intended to be fitted on each of the powder bottles employed in a station for preparing mixtures of powders. One thus obtains a very safe, precise, and reliable preparation of powder mixtures while avoiding all risks of cross contamination between the powders employed, and any loss of substance.

## Description

The present invention concerns a metering cap for the delivery of predetermined amounts of a substance contained in a recipient intended to be equipped with this cap.

Metering stations are known that are intended to be used in particular in pharmacies or dispensaries for the preparation of magisterial or officinal compositions from raw materials packaged in bottles, for instance vitamins or mineral compositions. In fact, certain compositions containing a combination of different active substances intended to fight relatively rare pathologies are not prepared, or are no longer prepared, industrially by the pharmaceutical industry on account of insufficiently widespread demand. On the other hand, a certain number of deficiencies revealed by biological tests can be avoided when applying pharmaceutical compositions prepared in an individual and personalized manner.

Thus, the public pharmacies and the dispensaries generally prepare their magisterial and officinal preparations by weighing each of the different ingredients and then mixing them. These operations demand special equipment, considerable attention and time, and particularly stringent hygiene measures.

The present invention allows to provide a metering cap that is adapted specifically to satisfy these demands, and can provide a highly safe, precise, and reliable metering and delivery of the substances while maintaining a very high degree of hygiene and cleanliness.

To this effect, the metering cap according to the invention is characterised in that it comprises a body and a metering disc mounted into the body that can turn around an axis of rotation, the disc being provided with at least one through hole, the body comprising a supply port at a first axial side able to communicate via a first opening with said hole in a first angular position of the disc, the body comprising a delivery port at a second axial side able to communicate via a second opening with said hole in a second angular position of the disc, said first and second opening being angularly offset in such a way that a predetermined unit volume of the substance is fed into the hole in the first angular position, and transported by rotation of the disc toward the second angular position where it is discharged through the delivery port.

These characteristics yield a metering cap for a precise, rapid, and highly hygienic metering without any loss of substances.

Favorably, the body comprises an upper part that is arranged at the first axial side and has a supply chamber with a bottom wall facing the metering disc and provided with said first opening, and a lower part integrally attached to the upper part that is arranged at the second axial side and has a top wall facing the metering disc, this top wall being provided with the second opening in communication with an exit channel forming the delivery port.

These characteristics provide for a simple construction and for a precise and reliable operation.

Advantageously, the metering disc is solidly attached to a central drive shaft rotatably mounted into the upper and lower parts and solidly attached to a gear wheel intended to cooperate with drive means.

By virtue of these characteristics, one obtains a reliable drive and a precisely controlled rotary motion.

Favorably, the metering cap is characterised in that the drive shaft runs at least in part through the supply chamber and is fitted with dispersing means intended to disperse the substance contained in this supply chamber.

By these characteristics, the metering regularity and precision can be further enhanced even in the presence of substances readily clogging. By agitating the powder, its clogging is inhibited and its clean outflow secured.

According to a preferred embodiment, the gear wheel is integral with a ring equipped with at least one piece intended to cooperate with a sensor adapted to count the number of unit portions distributed through the hole or holes.

In this way the metering is made very reliable without the need for costly equipment.

Favorably, the metering cap comprises a connecting piece mounted on the upper part and having means for attachment of the container holding the substance to be delivered.

Thus, the attachment to a given container is a very rapid and easy operation.

The invention also concerns a station for the preparation of mixtures of substances comprising means for conveying recipients holding substances to be metered, toward a delivery site where predetermined amounts of the substances are delivered, the station being characterised in that each of the recipients is equipped with a metering cap according to any of claims 1 to 8.

Considering that each recipient or bottle has its own metering device in the shape of an individual metering cap, all cross contamination between the substances can be avoided. The delivery mechanism and the metering reside in each cap rather than in the station.

Favorably, the conveying means consist of a turntable having recesses into which the metering caps are inserted in a predetermined position, the recipients being mounted upside down on the turntable.

These characteristics provide for a simple construction and for a precise operation.

A preferred embodiment is characterised by the fact that it comprises a delivery pinion mounted on an arm and designed to drive the metering disc that is solidly attached to a gear wheel of the metering cap placed on the delivery site while a sensor is provided that cooperates with at least one piece that is integral with the gear wheel and allows the number of unit portions delivered to be counted, these portions being recovered in a collector dish placed on a pan of a balance.

The metering thus is made highly precise and safe, with a double check of the metered weight.

Favorably, the station comprises an optical reader designed to read codes provided on the recipients, as well as means to visualise the data corresponding to these codes.

Errors as to the nature of the substances being metered can thus be avoided effectively, which contributes to the safety of the station.

Other advantages will become apparent from the characteristics expressed in the dependent claims and from the description describing hereinafter the invention in greater detail with the aid of drawings representing in a schematic and exemplary way one embodiment.
Figure 1 is a sectional view of this embodiment of the metering cap.

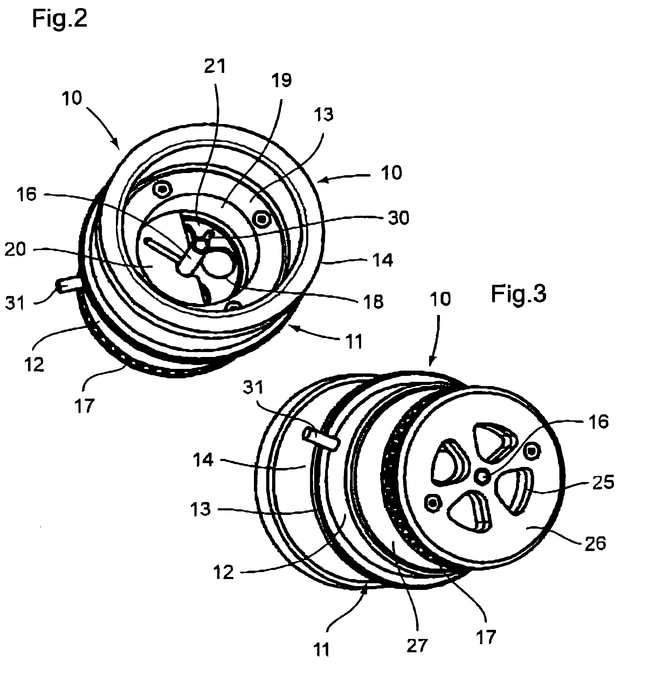

Figures 2 and 3 are perspective views of this embodiment.
Figure 4 is a schematic perspective view of an embodiment of a station for the preparation of mixtures making use of the metering caps cited.
Figure 5 is a partial perspective view showing part of Figure 4.

The metering cap 10 according to the invention serves as a volumetric delivery cap for powders such as pharmaceutical, food, or chemical powders having a grain size favorably below 300 µm.

This cap 10 is intended to be screwed on a container or bottle 44 holding the substance to be distributed.

Cap 10 comprises a cap body 11 with a lower part 12 and an upper part 13 solidly interconnected. A metering disc 15 is rotatably mounted between a bottom wall 20 of the upper part 13 and a top wall 24 of the lower part 12 of the cap body.

Disc 15 is solidly attached to a central drive shaft 16 mounted between the lower and upper parts 12 and 13 so as to rotate about an axis of rotation 16a. The drive shaft 16 is solidly attached to a gear wheel 17 so that it can be rotated by a drive mechanism. Disc 15 is provided with four through holes, bores, or cavities 18, each for gauging a unit volume of powder.

The upper part 13 situated at a first axial side 11 a of body 11 comprises a supply chamber 19 having a bottom wall 20 with a semicircular opening 21 through which the powder is fed into the cavities 18. This upper part thus serves as a obturator for the powder.

The lower part 12 situated at a second axial side 11 b of body 11 has a circular cylindrical bore 22 having an opening 23 in the top wall 24 that can match up with each of the cavities 18 of disc 15 so as to form an exit or delivery channel.

The upper and lower part 13 and 12 are assembled so that relative to drive shaft 16, opening 21 is diametrically opposite to opening 23.

Thus, in a first angular position of disc 15 the powder is fed through the semicircular opening 21 into one of the cavities 18 which transports the powder volume taken up towards opening 23 so as to deliver in a second angular position of disc 15 a predetermined unit portion into a receiving dish.

An operational play which advantageously amounts to 0.2 mm is voluntarily left between the metering disc 15 and the lower and upper parts 12, 13 that form dividing planes for the powder, in order to avoid a layering and crushing of the powder during continued rotation of the disc.

A gear wheel 17 is provided with four openings 25 that are coaxial with the cavities 18 of the metering disc 15 and are wider than these cavities in order to let the powder flow through freely. A flange 26 arranged at the free side of gear wheel 17 and provided with the same openings 25a, and a ring 27 are solidly attached to gear wheel 17 and serve to protect this wheel.

At its periphery, ring 27 is provided with four metal pieces or rods 28 adapted to cooperate with an inductive sensor so that the unit portions delivered can be counted and the total volume delivered can be determined in real time.

Advantageously, drive shaft 16 is provided in its upper part with dispersing and/or scraping means in the shape of radial pins 30 by means of which powder that may clog the supply chamber 19 can be dispersed.

A radial pin 31 mounted on the lower part 12 of body 11 allows the metering cap 10 to be fixed in a predetermined, marked position on a storage table of a metering device. In its upper part, body 11 is provided with a connecting piece 14 having a thread 32 for attaching the cap to a powder bottle or any other container or recipient.

The metering cap 10 functions as follows.

Cap 10 is screwed onto a bottle, then the bottle with its cap is turned upside down so that the powder can freely flow out by gravity when in contact with the metering disc 15.

In this position the volumetric delivery process is started by disc 15 being set in rotation by engagement with a gearing or drive pulley.

Each of the cavities 18 is filled with powder by gravity and by scraping with the pins 30. Disc 15 conveys the volume taken up underneath the scraper that is formed by bottom wall 20 in order to gauge the portion, and then in front of the pourer formed by bore 22 in order to liberate the portion taken.

The output depends on the speed of rotation of disc 15, on the number and size of the cavities 18.

The resolution of the delivery is given by the volume of one cavity 18.

Typically, this volume could be 14 µl for an application in the field of magisterial and officinal preparations. One thus obtains a great precision in the delivery amounting to plus/minus 7 µl, representing a precision of plus/minus 0.1 % in a total volume of 65 ml per preparation. Any loss of substance is avoided.

In other applications of the metering cap, for instance in the industrial metering of pharmaceutical, food, or chemical products, paint components etc., the volume of the cavities 18 could be quite different. It could be used, not only for powders of any grain size but also for more or less pasty substances and even for liquids, Moreover, the metering cap is closed, so that an untimely outflow of substances when not metering is prevented.

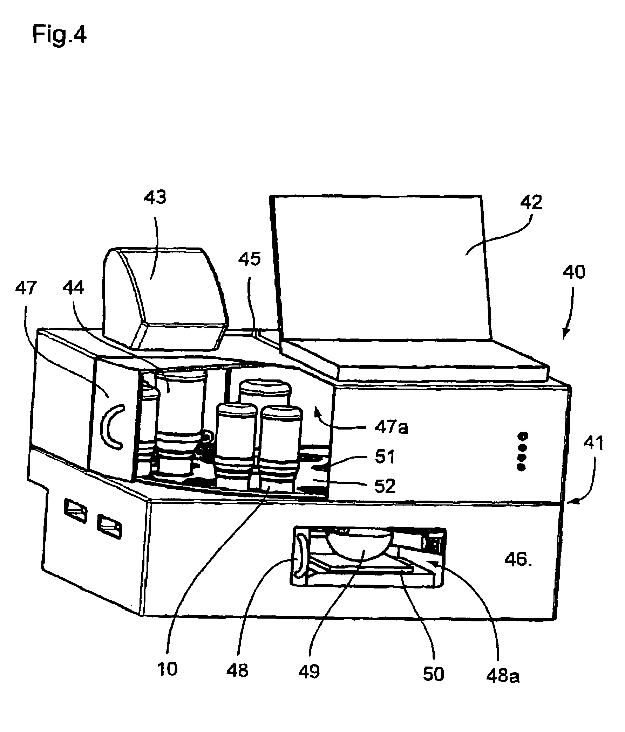

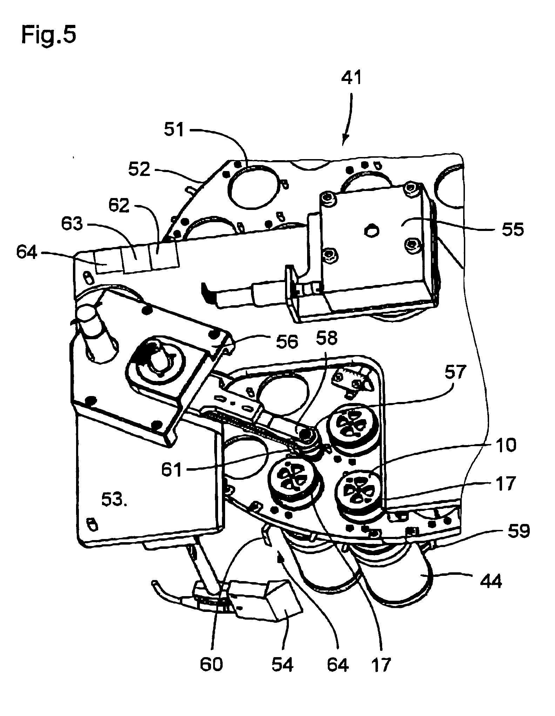

The metering cap 10 described above can be used to advantage in a station 40 for magisterial or officinal preparations such as that illustrated in Figures 4 and 5.

This station 40 comprises an automated preparation machine 41, a PC-type computer 42, a printer 43 for editing labels for the preparations realised in conformity with the pharmaceutical regulations, and a set of metering caps 10 adapted to fit each powder recipient or bottle 44 before it is placed into the machine 41. The computer 42 is intended to control machine 41 and printer 43, and is connected with them by cables 45, for instance of the USB type.

Machine 41 comprises a frame 46 and two secured gates 47a, 48a for the use of the operator. The first gate 47a having a swiveling door 47 serves to insert and withdraw bottles 44 on demand via a man/machine interface. The second gate 48a is provided with a sliding door 48 for the introduction and withdrawal of a receiving dish 49 intended to hold the magisterial or officinal preparation being made.

This receiving dish 49 is set up in the machine on the pan of a precision balance 50. This balance is connected with the computer 42 and guarantees correct metering as well as tarring of the receiving dish 49.

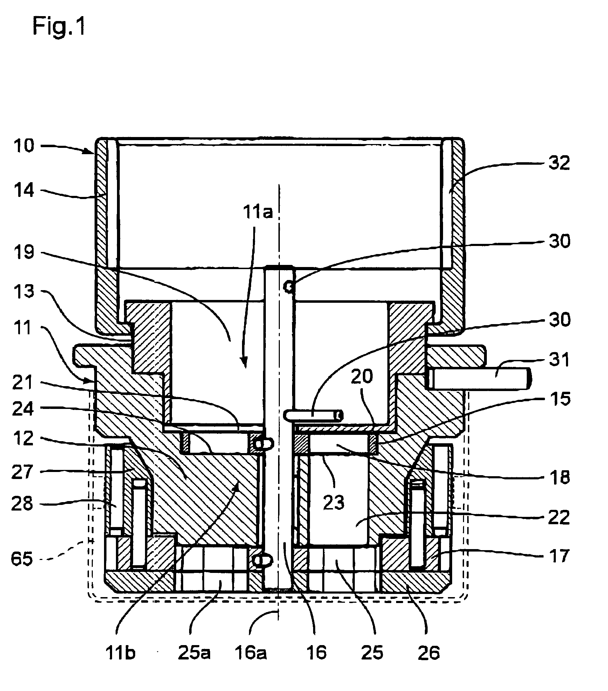

Bottles 44, all provided with a metering cap 10, are manually inserted upside down into recesses 51 provided in a driven turntable 52 rotatably mounted onto a horizontal wall 53 of the machine. This turntable 52 has 30 places or recesses 51 for the powder bottles or recipients arranged in two concentric circles close to the periphery of turntable 52. With its metering cap, each bottle 44 is mounted into a predetermined position indexed in a given recess 51. The indexing of the bottles and metering caps is realised via a radial pin 31 (Fig. 1) that is integral with the metering cap and cooperates with a retractable ball mechanism (not shown) that is automatically activated when a bottle is manually inserted in a vertical position into its recess 51 on the turntable. According to this design, the indexing of the metering cap 10 acts simultaneously on the angular and vertical position of the cap, and thus locks the bottle into a predetermined reference position.

The distribution of the bottles 44 on turntable 52 follows assignment instructions imposed by software loaded in computer 42, for instance according to available positions or according to the frequency of use of the bottles.

The machine is provided with an optical reader 54 (Figure 5) able to read bar codes printed on the labels of the bottles while the turntable 52 is rotated, so that the composition of the powders in the bottles on the turntable can be displayed on the screen of computer 42. The supplies are updated after each opening/closing of door 47 and in advance of each new preparation.

Turntable 52 is rotated by a motor 55. The recesses 51 are marked in an incremental manner starting with a zero mark 60 detected by the optical reader 54. Turntable 52 is moreover provided with mechanical marks 59 corresponding to the positions of each bottle and cooperating with locking means (not shown) so as to secure highly precise stopping positions of turntable 52.

A motorized three-position rocker 56 is mounted on the horizontal wall 53 and comprises a delivery pinion 57 rotatably mounted to the end of a swivel arm 58. By pivoting, this rocker engages its delivery pinion 57 with the gear wheel 17 of one of the metering caps 10 of a bottle 44 placed in one of the inner or outer concentric circles of turntable 52.

The delivery pinion 57 then starts rotating the metering disc 15 of the bottle selected and angularly positioned on a delivery site 64 facing the optical reader 54 and directly above the receiving dish 49.

The displacement of the metering disc 15 is realized according to a predetermined number of revolutions calculated by computer 42, measured by the inductive sensor 61 mounted on arm 58, and is a function of the amount of powder to be metered. Precision balance 50 (Fig. 4) provides an additional, precise checking of the amount metered. Preparation of the mixture thus is subject to double checking, by counting and weighing, in order to satisfy the pharmaceutical standards, that is, plus/minus 5 % by weight for each active substance.

Machine 41 is also provided with an intelligent electronic circuit 62 built around a microcontrollor 63 for two-way communication with balance 50 and computer 42 in order to obtain the correct position and/or correct speed of the different motors and to control the usual security means.

A multiple-voltage supply block 64 provides for energising the different elements such as the power drivers, the measuring equipments, and the digital processing equipments.

The overall operation of the station is as follows:
1. Analysis of the bottles present on turntable 52, by examination of the bar codes, checking the dates of validity, checking whether the products and volumes available match the needs for the formulation requested.
2. Checking for presence of the receiving dish 49 on balance 50 and storing the tare weight.
3. Calculating the weight of the products to be delivered, based on the number of capsules to be prepared, on the concentration desired, and on the density of the powders.
4. Selection of a first bottle 44 and delivery of the corresponding volume by counting the number of portions to deliver.
5. Weighing of the amount of product put into the recipient.
6. Calculation of an additional amount that may have to be delivered, and if necessary delivery of one or several additional portions.
7. Checking the total weight delivered against the imposed tolerances.
8. Verifying the sequence and passing to the next bottle.

The embodiment described above is of course in no way to be understood as limiting, and may receive any modification that could be desired within the scope defined by the independent claims. The metering disc 15 could more particularly have a different number of holes, bores, or cavities 18, for instance 1, 2, 3 or 5. This disc could be driven in a different way, for instance by contact with a drive pulley or by a belt drive, a revolving electromagnetic field etc.

The number of metal pins or pieces 28 could be different, for instance 1, 2, 3 or 5.

The sensor detecting the rotation of the metering disc could be of a different type, such as mechanical, optical, or capacitive sensor.

The pins 30 raking and dispersing the powder could be replaced by other organs such as rakes, forks, etc.

The means for fixing the metering caps on the recipients could be of a type other than screwing, for instance by means of locking clamps.

The station could have a very different general layout, with other transport means such as conveyer belts, carriages, etc. The means for driving the metering caps could be realised in a different manner. For certain applications the balance 50 could be omitted.

While the metering cap and the station that have been described above are particularly favorable for master batch, magisterial and officinal preparations, they could equally well be adapted for quite different types of use in the crafts or industry, for instance in connection with chemical, pharmaceutical, food, paint products etc. The substances could be powders, pastes, even liquids if somewhat adapting the metering disc.

The lower part 12 of body 11 and the gear wheel 17 could be covered by a cover cap 65 (Figure 1) so as to prevent all rotation of the metering disc 15 and all loss of substance during storage or handling of the bottles.

## Claims

1. Metering cap for the delivery of predetermined amounts of a substance contained in a recipient (44) onto which the cap is to be mounted, **characterised in that** it comprises a body (11) and a metering disc (15) mounted rotatably around an axis of rotation (16) into the body, the disc 15) being provided with at least one through hole (18), the body comprising a supply port (19) at a first axial side able to communicate via a first opening (21) with said hole (18) in a first angular position of disc (15), the body (11) comprising a delivery port (22) at a second axial side able to communicate via a second opening (23) with said hole (18) in a second angular position of disc (15), said first and second opening (21, 23) being angularly offset in such a way that a predetermined unit volume of the substance is fed into the hole (18) in the first angular position, and transported by rotation of disc (15) toward the second angular position where it is discharged through the delivery port.

2. Metering cap according to claim 1, **characterised in that** body (11) comprises an upper part (14) that is arranged at the first axial side and has a supply chamber (19) with a bottom wall (20) facing the metering disc and provided with said first opening (21), and a lower part (12) integrally attached to the upper part that is arranged at the second axial side and has a top wall (24) facing the metering disc, this top wall (24) being provided with the second opening (23) in communication with an exit channel (22) forming the delivery port.

3. Metering cap according to claim 2, **characterised in that** the metering disc (15) is solidly attached to a central drive shaft (16) rotatably mounted into the upper and lower parts and solidly attached to a gear wheel (17) intended to cooperate with drive means (57).

4. Metering cap according to claim 3, **characterised in that** the drive shaft (16) runs at least in part through the supply chamber (19) and is fitted with dispersing means intended to disperse the substance contained in this supply chamber.

5. Metering cap according to claim 3, **characterised in that** the metering disc (15) comprises four through holes (18) arranged around the drive shaft (16) and having a cross section smaller than or equal to that of the second opening (23).

6. Metering cap according to claim 5, **characterised in that** the gear wheel (17) on its free side is provided with a flange (26) while the gear wheel and the flange have openings (25, 25a) coaxial with the holes (18) and larger than the holes.

7. Metering cap according to claim 3, **characterised in that** the gear wheel (17) is integral with a ring (27) equipped with at least one piece (28) intended to cooperate with a sensor (61) adapted to count the number of unit portions delivered by the hole or holes (18).

8. Metering cap according to claim 2, **characterised in that** it comprises a connecting piece (14) mounted on the upper part (13) and having means (32) for attachment of the recipient (44) containing the substance to be delivered.

9. Station for the preparation of mixtures of substances comprising means (52) for conveying recipients (44) containing substances to be metered, toward a delivery site (64) where predetermined amounts of the substances are delivered, the station being **characterised in that** each of the recipients (44) is equipped with a metering cap (10) according to any of claims 1 to 8.

10. Station according to claim 9, **characterised in that** the conveying means consist of a turntable (52) having recesses (51) into which the metering caps (10) are inserted in a predetermined position, the recipients (44) being mounted upside down on the turntable (52).

11. Station according to claim 10, **characterised in that** it comprises a delivery pinion (57) mounted on an arm (58) and designed to drive the metering disc (15) solidly attached to a gear wheel (17) of the metering cap (10) placed on the delivery site (64) while a sensor (61) is provided that cooperates with at least one piece (28) that is integral with the gear wheel (17) and allows the number of unit portions delivered to be counted, these portions being recovered in a collector dish (49) placed on a pan of a balance (50).

12. Station according to claim 9, **characterised in that** it comprises an optical reader (54) designed to read codes provided on the recipients, and means (42) to visualise data corresponding to these codes.
